# EUROPEAN PATENT APPLICATION

(11) **EP 2 600 132 A1**
(43) Date of publication of application: **05.06.2013**
(21) Application number: 11306594.0
(22) Date of filing: 30.11.2011
(51) Int. Cl.: G01M 11/00, H04B 10/071

(54) **Optical bypass**

(71) Applicant: FRANCE TELECOM, 75015 Paris (FR)
(72) Inventor: Nowosielski, Sebastian, 04-680 VARSOW (PL); Turkiewicz, Jerzy, 20-535 LUBLIN (PL)

(57) **Abstract**

The invention relates to an optical network comprising an optical central office connected to at least one line terminal equipment by at least a first section of optical fiber, said central office comprising :
- means for emitting a first optical signal carrying data through the first section of optical fiber; the optical power of the first optical signal being amplified by electrically amplifying means embedded in the first section of optical fiber.

The optical network comprises :
- means for separating the first optical signal and a second optical signal for monitoring the optical network emitted through the first section of optical fiber by emitting means comprised in the central office, the separating means being embedded in the first section of optical fiber between the central office and the electrically amplifying means, and
- means for injecting the second optical signal in the first section of optical fiber between the electrically amplifying means and the line terminal equipment by a second extremity.

## Description

The invention relates to optical access networks and more particularly to passive optical networks (PON).

Standard passive optical access networks have a range of the order of 20 kilometers (km). This limited range is linked to the fact that in passive optical networks the optical components, for example couplers, multiplexers and optical fibers, cause optical signals transmitted through the optical network to lose optical power. However, the optical signals being transmitted through the optical network cannot be amplified to compensate such losses without incurring constraints. In a passive optical network the downlink optical signals, i.e. the optical signals sent to user equipments, and the uplink optical signals, i.e. the optical signals sent by user equipments to an optical central office, are carried through a single optical fiber. This reduces the cost of the optical network. However, using a single optical fiber to carry the uplink and downlink optical signals introduces constraints on the power at which those optical signals are transmitted, which leads to the limited range of the network.

Although the range of passive optical access networks is sufficient in urban areas, where users are at relatively short distances from the optical central offices, of the order of 5 km to 10 km, this does not apply to users in rural areas, where users are often geographically dispersed and are therefore usually situated at a distance from the optical central offices, which constitute an end of the optical networks, greater than the standard range of a passive optical network. Those users are therefore unable to benefit from the high transmission bit rates offered by passive optical networks and thus from the services on offer that require a high bit rate connection.

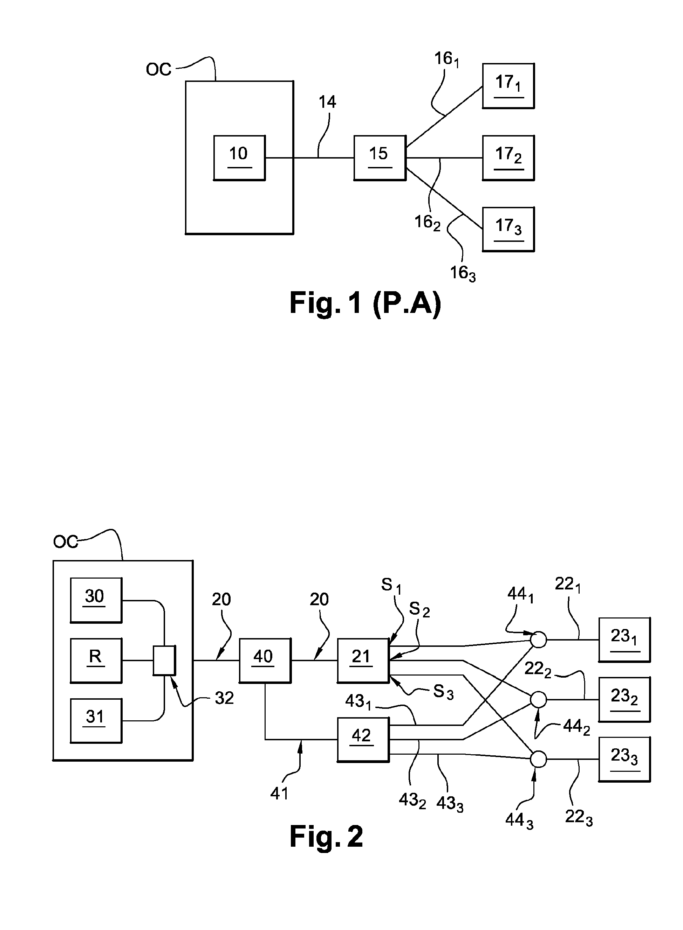

In order to increase the range of a passive optical network or the number of user equipments connected to a passive optical network, it is known to implement a long-reach passive optical network. A long-reach passive optical network is a point to multipoints network, for example, as shown in **figure 1****.** An optical central office OC constitutes a first end of the network. A first end of an optical fiber 14 is connected to the output of the optical central office OC. A second end of the optical fiber 14 is connected to the input of virtual splitter 15 having one input and N outputs, N representing the number of branches in the network. The optical fiber 14 is referred to as the main branch of the network. A first end of an optical fiber 16ⱼ, j ∈ {1, 2, ..., N}, is connected to one of the N outputs Sⱼ of the virtual splitter 15. A second end of the optical fiber 16ⱼ is connected to a line termination device 17ᵢ, i ∈ {1, 2, ..., N} to which one or more users are connected. The optical fibers 16₁ to 16_{N} are referred to as secondary branches of the network.

The optical central office OC includes a first laser 10 producing an optical signal associated with a particular wavelength. In the network this optical signal carries data addressed to line termination devices 17ᵢ connected in accordance with the time division multiplexing principle.

A virtual splitter 15 is an opto-electric device capable of amplifying the optical power of an optical signal. Upon intercepting the optical signal carrying data, the virtual splitter 15 converts the optical signal carrying data into an electric signal carrying data. The electrical signal carrying data is then processed by electrical means such as e.g. electrical amplifiers. Once the electrical signal carrying data was processed, it is converted back to an optical signal carrying data, the optical power of which has been amplified. The amplified optical signal carrying data is then sent through the network.

The introduction of a virtual splitter 15 in a passive optical network causes the loss of the optical continuity of the network between the optical central office OC and the line termination devices 17ᵢ. A drawback of this kind of architecture is that the virtual splitter 15 reduces the possibilities of the supervision and monitoring of the physical layer of the network, i.e. the optical fibers constituting the network.

The supervision and monitoring of the physical layer of the network consists in estimating the length of the optical fiber's and overall attenuation, including splice and mated-connector losses. Supervision and monitoring of the physical layer of the network enables locating faults of the optical fibers, such as breaks, and to measure optical return loss.

There is a need for a solution enabling supervision and monitoring of the physical layer of an optical network comprising a virtual splitter.

It is an objective of the present invention to overcome disadvantages of the prior art.

To that extend, the present invention relates to an optical network comprising an optical central office connected to at least one line terminal equipment by at least a first section of optical fiber, said central office comprising :
- means for emitting a first optical signal carrying data through the first section of optical fiber; the optical power of the first optical signal being amplified by electrically amplifying means embedded in the first section of optical fiber.

Such an optical network comprises :
- means for separating the first optical signal and a second optical signal for monitoring the optical network emitted through the first section of optical fiber by emitting means comprised in the central office, the separating means being embedded in the first section of optical fiber between the central office and the electrically amplifying means, and
- means for injecting the second optical signal in the first section of optical fiber between the electrically amplifying means and the line terminal equipment by a second extremity.

Such a network architecture enables the second optical signal for monitoring the optical network to bypass the electrically amplifying means. Thus, the optical continuity of the network between the optical central office OC and the line termination devices is restored. It is then possible to supervise and monitor the physical layer of the optical network even though the network comprises a non optic component such as electrically amplifying means.

The optical network of the invention further comprises
- an input of the means for separating the first and the second optical signals is connected to the first section of optical fiber,
- a first output of the means for separating the first and the second optical signals is connected to an input of the electrically amplifying means,
- a second output of the means for separating the first and the second optical signals is connected to an input of the means for injecting the second optical signal,
- an output of the means for injecting the second optical signals is connected to the first section of optical fiber.

The first and second optical signals are intercepted and separated by the means for separating the first and second optical signals. The first optical signal is then transmitted through the first output of the means for separating the first and second optical signals, to the input of the electrically amplifying means. The first output of the means for separating the first and second optical signals are connected to the input of the electrically amplifying means, for example by means of a section of optical fiber.

The second optical signal is transmitted through the second output of the means for separating the first and second optical signals, to the input of the means for injecting the second optical signal. The second output of the means for separating the first and second optical signals are connected to the input of the means for injecting the second optical signal, for example by means of a section of optical fiber.

The means for injecting the second optical signal intercepts the second optical signal and injects it in the first section of optical fiber. The output of the means for injecting the second optical signal is connected to the first section of optical fiber.

Such a solution is easy to implement for it consists in cleverly connected means for separating optical signals and means for injecting optical signals in an optical fiber. Furthermore, it is a cost effective solution.

According to another characteristic of the optical network of the invention, the means for separating the first and second optical signals is an optical coupler.

Such an optical splitter is a passive optical device. The use of such an optical component does not increase the energetic consumption of the optical network.

According to another characteristic of the optical network of the invention, the means for injecting the second optical signals is an optical coupler.

Such an optical splitter is a passive optical device. The use of such an optical component does not increase the energetic consumption of the optical network.

Another object of the invention is an optical device intended to be embedded in an optical network comprising an optical central office connected to at least one line terminal equipment by at least a first section of optical fiber, said central office comprising :
- means for emitting a first optical signal carrying data through the first section of optical fiber; the optical power of the first optical signal being amplified by electrically amplifying means embedded in the first section of optical fiber.

Such an optical device comprises :
- means for separating the first optical signal and a second optical signal for monitoring the optical network emitted through the first section of optical fiber by emitting means comprised in the central office, the separating means enabling the connection of the optical device to the first section of optical fiber between the central office and the electrically amplifying means, and
- means for injecting the second optical signal in the first section of optical fiber, the injecting means enabling the connection of the optical device to the first section of optical fiber between the electrically amplifying means and the line terminal equipment by a second extremity.

Such an optical device can easily be embedded in an existing optical network comprising means for electrically amplifying an optical signal. The optical device is cost effective for it embeds passives optical components such as sections of optical fiber and optical splitters.

The invention concerns as well an opto-electric module, intended to be embedded in an optical network comprising an optical central office connected to at least one line terminal equipment by at least a first section of optical fiber, said central office comprising means for emitting a first optical signal carrying data through the first section of optical fiber.

Such an opto-electric module comprises :
- means for electrically amplifying the optical power of the first optical signal embedded in the first section of optical fiber,
- means for separating the first optical signal and a second optical signal for monitoring the optical network emitted through the first section of optical fiber by emitting means comprised in the central office, an input of the means for separating the first and the second optical signals being connected to the first section of optical fiber, a first output of the means for separating the first and the second optical signals being connected to an input of the electrically amplifying means,
- means for injecting the second optical signal in the first section of optical fiber, the injecting means enabling the connection of the optical device to the first section of optical fiber, a second output of the means for separating the first and the second optical signals being connected to an input of the means for injecting the second optical signal and an output of the means for injecting the second optical signals being connected to the first section of optical fiber.

Such an opto-electric module is, for example an extender box. Such a module is easy to embed in an existing optical network since it is only necessary to connect the inputs and outputs of the extender box to a section of optical fiber. This solution enables upgrading an existing optical network in a cost effective way.

The present system and method are explained in further detail, and by way of example, with reference to the accompanying drawings wherein:
FIG. 1 represents an optical network according to the prior art,
FIG. 2 represents an optical network according to the invention,
FIG. 3 represents an optical device intended to be embedded in an optical network according to the invention,
FIG. 4 represents an opto-electric module intended to be embedded in an optical network according to the invention.
**Figure 2** represents an optical network N. The optical network N is a point to multipoints network.

An central office OC constitutes a first end of the optical network N. A first end of an first section of optical fiber 20, or optical fiber 20, is connected to the output of the optical central office OC. A second end of the optical fiber 20 is connected to the input of virtual coupler 21 having one input and N outputs, N representing the number of branches of the optical network N. The optical fiber 20 is referred to as the main branch of the network.

A first end of an optical fiber 22ⱼ, j ∈ {1, 2, ..., N}, is connected to one of the N outputs Sⱼ of the virtual coupler 21. A second end of the optical fiber 22ⱼ is connected to a line termination device 23ᵢ, i ∈ {1, 2, ..., N}, to which one or more users are connected. The optical fibers 22₁ to 22_{N} are referred to as secondary branches of the network.

The central office OC includes a first laser 30 producing a first optical signal associated with a particular wavelength. In the optical network N this first optical signal carries data sent to various users connected to the optical network N in accordance with the time division multiplexing principle.

The central office OC also includes a second laser diode 31 producing a second optical signal associated with a particular wavelength different from the wavelength associated with the first data optical signal. The second laser diode 31 is an optical time-domain reflectometer OTDR producing a monitoring optical signal. Such a monitoring optical signal is emitted as a series of optical pulses. A fraction of the optical power of the monitoring optical signal is scattered or reflected back to the central office OC when the monitoring optical signal is intercepted by optical components of the optical network N, such as e.g. the virtual coupler 21 or a line termination device 23ⱼ, this phenomenon is called Rayleigh backscattering. The optical power of the back-scattered optical pulses is measured and integrated as a function of time, and is plotted as a function of fiber length.

The outputs of the lasers 30 and 31 are each connected to an input of a 3:1 optical multiplexer 32 The central office OC also includes a module R for receiving signals sent by the line termination devices 23, to 23_{N} A first end of the optical fiber 20 is connected to the output of the optical multiplexer 32, firstly enabling the signals produced by the lasers 20 and 31 to pass through the optical network N toward the line termination devices 23₁ to 23_{N} and secondly enabling the optical signals sent by the line termination devices 23ⱼ to pass through the optical network N toward the central office OC and the receiving means R.

Each of the optical fibers 20 and 22₁ to 22_{N} constituting the optical network N enables bidirectional transmission of optical signals in the optical network N; in other words, the same optical fiber carries uplink signals from a line termination device 23ⱼ to the central office OC and downlink signals from the central office OC to the line termination devices 23ⱼ. This reduces the cost of the optical network N and facilitates its maintenance.

The virtual splitter 21, or virtual coupler 21, is an opto-electric device capable of amplifying the optical power of an optical signal. Upon intercepting the optical signal carrying data, the virtual coupler 21 converts the optical signal carrying data into an electric signal carrying data. The electrical signal carrying data is then processed by electrical means such as e.g. electrical amplifiers. Once the electrical signal carrying data was processed, it is converted back to an optical signal carrying data, the optical power of which has been amplified. The amplified optical signal carrying data is then sent through the network.

A first optical splitter 40 comprising one input and two outputs is embedded in the optical fiber 20 between the central office OC and the virtual splitter 21. The input of the optical splitter 40 is connected to the central office OC. A first output of the optical splitter 40 is connected to the input of the virtual splitter 21. A second output of the optical splitter 40 is connected to a first extremity of a section of optical fiber 41. The virtual splitter 40 separates the optical signal carrying data and the monitoring optical signal. The optical signal carrying data is transmitted toward the virtual splitter 21 and the monitoring optical signal is transmitted through the section of optical fiber 41 ;

An input of an optical splitter 42 is connected to a second extremity of the section of optical fiber 41. The optical splitter 42 comprises as many outputs as the number of branches of the optical network N, i.e. the optical splitter 42 has N outputs.

A first end of a section of optical fiber 43ⱼ, j ∈ {1, 2, ..., N}, is connected to one of the N outputs of the optical splitter 42. A second end of the section of optical fiber 43ⱼ is connected to a first input of another optical splitter 44ᵢ, i ∈ {1, 2, ..., N}, an output of which is connected to the optical fiber 22ⱼ.

A second input of the optical splitter 44ⱼ is connected to the output Sⱼ of the virtual splitter 21.

The optical splitter 44ⱼ enables the injection of the optical signal carrying data and the monitoring optical signal into the optical fiber 22ⱼ.

The use of the optical splitters 40, 42 and 43ⱼ enables the monitoring optical signal for to bypass the virtual splitter 21 s. Thus, the optical continuity of the optical network N between the central office OC and the line termination devices 23ⱼ is restored. It is then possible to supervise and monitor the physical layer of the optical network N even though the optical network N comprises a non optic component such as electrically amplifying means.

Optical splitters 40, 42 and 43ⱼ are passive optical components. The use of such optical components does not increase the energetic consumption of the optical network N.

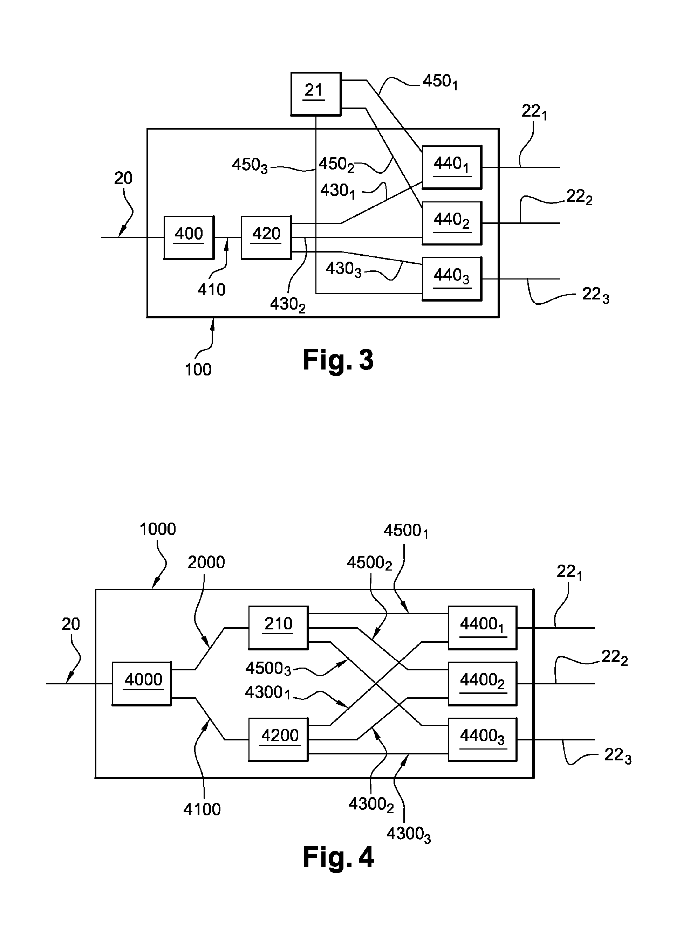

**Figure 3** represents an optical device 100 intended to be embedded in an optical network N.

The optical device 100 comprises a first optical splitter 400 comprising one input and two outputs. The input of the optical splitter 400 is connected to the optical fiber 20. A first output of the optical splitter 400 is connected to the input of the virtual splitter 21 by means of a section of optical fiber 200.

A second output of the optical splitter 400 is connected to a first extremity of a section of optical fiber 410. The virtual splitter 400 separates the optical signal carrying data and the monitoring optical signal. The optical signal carrying data is transmitted toward the virtual splitter 21 through the section of optical fiber 200 and the monitoring optical signal is transmitted through the section of optical fiber 410.

The optical device comprises a second optical splitter 420. An input of optical splitter 420 is connected to a second extremity of the section of optical fiber 410. The optical splitter 420 comprises as many outputs as the number of branches of the optical network N, i.e. the optical splitter 420 has N outputs.

The optical device 100 comprises N others optical splitter 440ⱼ, j ∈ {1, 2, ..., N}. A first end of a section of optical fiber 430ⱼ, j ∈ {1, 2, ..., N}, is connected to one of the N outputs of the optical splitter 420. A second end of the section of optical fiber 430ⱼ is connected to a first input of the optical splitter 440ⱼ, an output of which is connected to the optical fiber 22ⱼ.

A second input of the optical splitter 440ⱼ is connected to the output Sⱼ of the virtual splitter 21 by means of a section of optical fiber 450ⱼ.

The optical splitter 440ⱼ enables the injection of the optical signal carrying data and the monitoring optical signal into the optical fiber 22ⱼ.

The use of the optical splitters 400, 420 and 430ⱼ enables the monitoring optical signal for to bypass the virtual splitter 21. Thus, the optical continuity of the optical network N between the central office OC and the line termination devices 23ⱼ is restored. It is then possible to supervise and monitor the physical layer of the optical network N even though the optical network N comprises a non optic component such as electrically amplifying means.

Such an optical device 100 is a passive optical device.

The optical device 100 an easily be embedded in an existing optical network N comprising a virtual splitter 21. The optical device 100 is cost effective for it embeds passives optical components such as sections of optical fiber and optical splitters.

**Figure 4** represents an opto-electric module 1000 intended to be embedded in an optical network N.

The opto-electric module 1000 comprises a first optical splitter 4000 comprising one input and two outputs. The input of the optical splitter 4000 is connected to the optical fiber 20. A first output of the optical splitter 4000 is connected to the input of a virtual splitter 2100 comprised in the opto-electric module 1000 by means of a section of optical fiber 2000.

A second output of the optical splitter 4000 is connected to a first extremity of a section of optical fiber 4100. The virtual splitter 4000 separates the optical signal carrying data and the monitoring optical signal. The optical signal carrying data is transmitted toward the virtual splitter 210 through the section of optical fiber 2000 and the monitoring optical signal is transmitted through the section of optical fiber 4100.

The opto-electric module 1000 comprises a second optical splitter 4200. An input of optical splitter 4200 is connected to a second extremity of the section of optical fiber 4100. The optical splitter 4200 comprises as many outputs as the number of branches of the optical network N, i.e. the optical splitter 4200 has N outputs.

The opto-electric module 100 comprises N others optical splitter 4400ⱼ, j ∈ {1, 2, ..., N}. A first end of a section of optical fiber 4300ⱼ, j ∈ {1, 2, ..., N}, is connected to one of the N outputs of the optical splitter 4200. A second end of the section of optical fiber 4300ⱼ is connected to a first input of the optical splitter 4400ⱼ, an output of which is connected to the optical fiber 22ⱼ.

A second input of the optical splitter 4400ⱼ is connected to the output Sⱼ of the virtual splitter 2100 by means of a section of optical fiber 4500ⱼ.

The optical splitter 4400ⱼ enables the injection of the optical signal carrying data and the monitoring optical signal into the optical fiber 22ⱼ.

The use of the optical splitters 4000, 4200 and 4300ⱼ enables the monitoring optical signal for to bypass the virtual splitter 21. Thus, the optical continuity of the optical network N between the central office OC and the line termination devices 23ⱼ is restored.

The opto-electric module 1000 is easy to embed in an existing optical network N since it is only necessary to connect the inputs and outputs of the extender box to a section of optical fiber. This solution enables upgrading an existing optical network in a cost effective way.

## Claims

1. An optical network comprising an optical central office connected to at least one line terminal equipment by at least a first section of optical fiber, said central office comprising :
- means for emitting a first optical signal carrying data through the first section of optical fiber; the optical power of the first optical signal being amplified by electrically amplifying means embedded in the first section of optical fiber,
**characterized in that** the optical network comprises :
- means for separating the first optical signal and a second optical signal for monitoring the optical network emitted through the first section of optical fiber by emitting means comprised in the central office, the separating means being embedded in the first section of optical fiber between the central office and the electrically amplifying means, and
- means for injecting the second optical signal in the first section of optical fiber between the electrically amplifying means and the line terminal equipment by a second extremity.

2. An optical network according to claim 1 wherein :
- an input of the means for separating the first and the second optical signals is connected to the first section of optical fiber,
- a first output of the means for separating the first and the second optical signals is connected to an input of the electrically amplifying means,
- a second output of the means for separating the first and the second optical signals is connected to an input of the means for injecting the second optical signal,
- an output of the means for injecting the second optical signals is connected to the first section of optical fiber.

3. An optical network according to claim 1 wherein the means for separating the first and second optical signals is an optical coupler.

4. An optical network according to claim 1 wherein the means for injecting the second optical signals is an optical coupler.

5. Optical device intended to be embedded in an optical network comprising an optical central office connected to at least one line terminal equipment by at least a first section of optical fiber, said central office comprising :
- means for emitting a first optical signal carrying data through the first section of optical fiber; the optical power of the first optical signal being amplified by electrically amplifying means embedded in the first section of optical fiber,
**characterized in that** the optical device comprises :
- means for separating the first optical signal and a second optical signal for monitoring the optical network emitted through the first section of optical fiber by emitting means comprised in the central office, the separating means enabling the connection of the optical device to the first section of optical fiber between the central office and the electrically amplifying means, and
- means for injecting the second optical signal in the first section of optical fiber, the injecting means enabling the connection of the optical device to the first section of optical fiber between the electrically amplifying means and the line terminal equipment by a second extremity.

6. An opto-electric module, intended to be embedded in an optical network comprising an optical central office connected to at least one line terminal equipment by at least a first section of optical fiber, said central office comprising means for emitting a first optical signal carrying data through the first section of optical fiber; **characterized in that** the opto-electric module comprises :
- means for electrically amplifying the optical power of the first optical signal embedded in the first section of optical fiber,
- means for separating the first optical signal and a second optical signal for monitoring the optical network emitted through the first section of optical fiber by emitting means comprised in the central office, an input of the means for separating the first and the second optical signals being connected to the first section of optical fiber, a first output of the means for separating the first and the second optical signals being connected to an input of the electrically amplifying means,
- means for injecting the second optical signal in the first section of optical fiber, the injecting means enabling the connection of the optical device to the first section of optical fiber, a second output of the means for separating the first and the second optical signals being connected to an input of the means for injecting the second optical signal and an output of the means for injecting the second optical signals being connected to the first section of optical fiber.
